# EUROPEAN PATENT SPECIFICATION

(11) **EP 1 108 658 B1**
(45) Date of publication and mention of the grant of the patent: **16.04.2003**
(21) Application number: 00310576.4
(22) Date of filing: 29.11.2000
(51) Int. Cl.: B65G 13/11

(54) **Roller track**
Rollenbahn
Voie à rouleaux

(30) Priority: 14.12.1999 GB 9929398
(43) Date of publication of application: 20.06.2001
(73) Proprietor: Flowstore Systems Plc, Hayes, Middlesex UB3 1AU (GB)
(72) Inventor: Dennis, Simon James, Ickenham, Middlesex UB10 8TE (GB); Warner, Douglas Sidney, Southall, Middlesex UB2 5NB (GB)
(74) Representative: Parry, Christopher Stephen

(56) References cited:
- DE-U- 8 408 175
- FR-A- 2 635 509
- GB-A- 1 099 549
- US-A- 4 054 195

## Description

The invention relates to a roller track for so-called live storage systems.

Live storage systems use inclined tracks incorporating rollers such that articles stored on the tracks can move under gravity to the lower ends of the tracks. In this way, articles removed from the lower ends of the tracks are continually replaced by articles from above and behind.

The tracks generally consist of a plurality of cylindrical rollers with either an integral spindle or a separate steel spindle mounted for rotation in an elongate steel track profile generally in the form of a U-shaped channel as shown, for example, in US-A-4 054 195. In known tracks, the ends of the spindles are located in slots or holes formed in the side walls of the steel profiles. In order to fit the rollers, the profile must be spread open after it has been formed in order to insert the rollers, or alternatively the profile having pre-formed holes is formed around the rollers, the rollers being fed into the profile as it is formed.

A first aspect of the present invention provides a roller track comprising at least one cylindrical roller having a spindle extending from either end thereof and a generally U-shaped track profile having a base wall and a pair of opposed side walls; wherein each side wall is formed with a plurality of recesses for receiving the spindles of rollers and with a tab adjacent to each recess which is bent after location of a spindle in the recess to retain the spindle in the recess.

According to another aspect of the invention there is provided a method of manufacturing a roller track comprising the steps of: providing a track profile, in accordance with the first aspect of the invention; dropping rollers with spindles onto the track profile such that the ends of the spindles of each roller locate in a pair of recesses; and bending the tabs of the associated recesses to retain the spindles therein.

Embodiments of the invention are described below, with reference to the accompanying drawings, in which:
Figure 1 is a perspective view of a length of track profile;
Figure 2 is a side view of a roller with spindle;
Figure 3 is an enlarged view of a recess looking from within the track profile in the direction indicated by the arrows III-III in Figure 1; and
Figure 4 is a partial view of a length of track profile in blank form prior to being folded to the configuration shown in Figure 1.

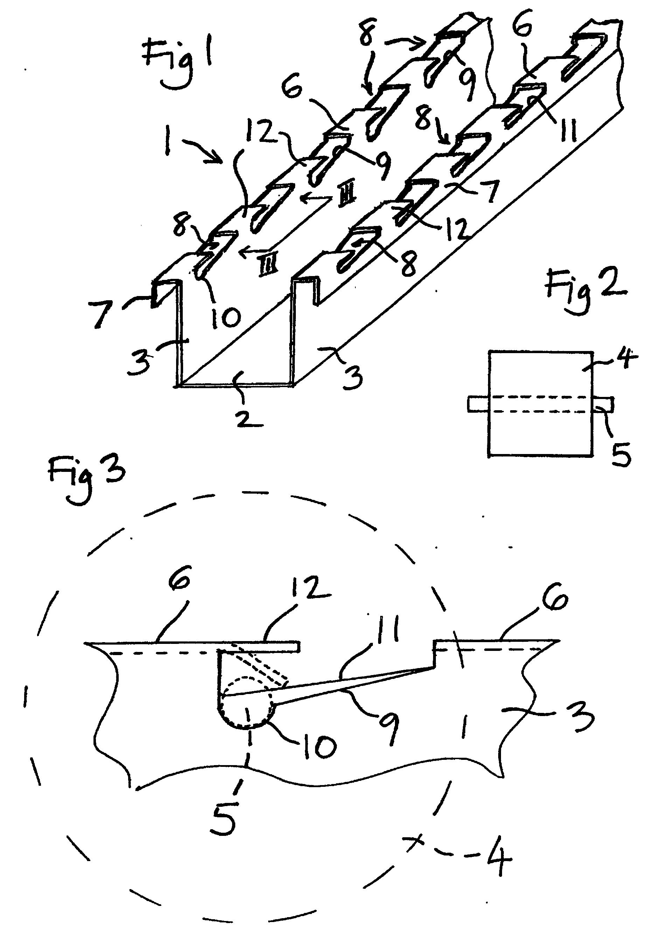

As can be seen from Figure 1, the roller track profile 1 is formed as a generally U-shaped channel having a base wall 2 and a pair of opposed side walls 3. The profile is formed of steel and is pressed from a flat blank (see Figure 4).

A single cylindrical roller 4 having a spindle 5 fitted therethrough and extending from either end thereof is shown in Figure 2. The roller may be made of plastic or steel with an integrally formed spindle or, more preferably, the roller may be moulded from plastic and have a separate steel spindle fitted therethrough as shown. The roller may be free to rotate on the spindle.

Referring to Figures 1, 3 and 4, it can be seen that each side wall is bent over at its upper edge to form a flange 6 extending parallel to the base and that the flange in turn is bent over at its outer edge to form a return wall 7 extending parallel to the side wall and back towards the base.

The side walls 3, flanges 6 and return walls 7 are cut away at spaced intervals to provide a plurality of aligned pairs of recesses 8. The upper edge of each of the side walls in the region of each recess 8 is formed with a section 9 which is inclined relative to the base 2. A spindle-receiving notch 10 is formed at the lower end of each inclined section 9. The corresponding portions of the return wall 7 are formed with a less steeply inclined edge section 11 and there is no corresponding notch.

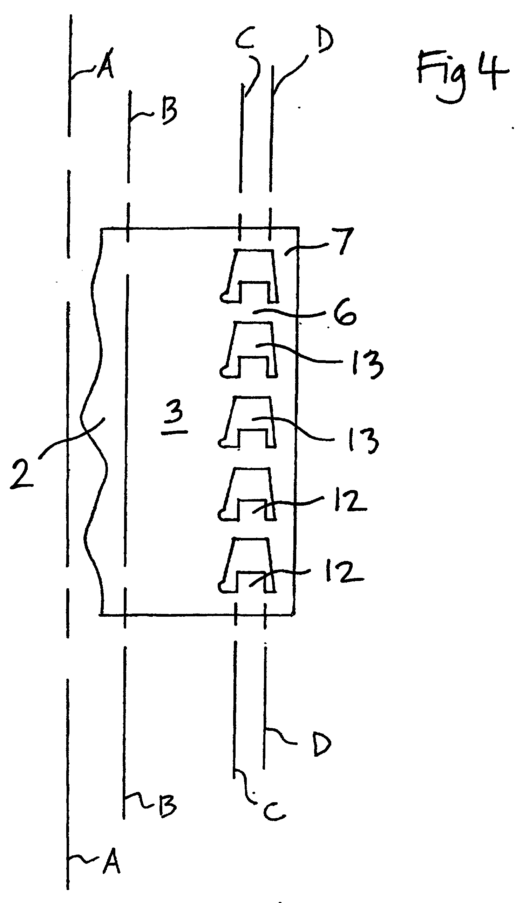

A tab 12 is formed in the flange 6 adjacent to and partially overlying each recess 8. As shown in phantom in Figure 3, the tabs 12 can be bent downwardly out of the plane of the flange 6 to retain the end of a spindle 5 in the associated notch 10.

A blank for forming the track profile is partially shown in Figure 4. Line A represent the centre line of the blank; line B represents the 90° bend between the base 2 and the side wall 3; line C represents the 90° bend between the side wall 3 and the flange 6; and line D represents the 90° bend between the flange 6 and the return wall 7. Cut-outs 13 are provided. The cut-outs 13 define the recesses 8 and tabs 12 when the track profile is formed.

Assembly of the roller track is as follows. A track profile blank is folded about lines B, C and D to provide the track profile shown in Figure 1.

Rollers 4 fitted onto spindles 5 are then dropped onto the track profile such that the ends of the spindles 5 are supported on the inclined sections 9 of the side walls 3. The rollers will now roll down the inclined sections until the ends of the spindles locate in the notches 10. Once the rollers are correctly located, the tabs 12 are bent downwardly to retain the spindles in the notches 10 within the recesses 8.

The length of the spindles 5 is such that their ends lie within the return walls 7. This prevents the spindles moving laterally out of the recesses 8.

Rollers may be fitted in some or all of the recesses 8. In the embodiment shown, a roller 4 will be fitted into every other pair of recesses.

## Claims

1. A roller track (1) comprising at least one cylindrical roller (4) having a spindle (5) extending from either end thereof and a generally U-shaped track profile having a base wall (2) and a pair of opposed side walls (3); wherein each side wall (3) is formed with a plurality of recesses (8) for receiving the spindles (5) of rollers and with a tab (12) adjacent to each recess ,**characterised in that** said tab (12) is bent after location of a spindle (5) in the recess (8) to retain the spindle in the recess.

2. A roller track according to Claim 1, wherein each side wall is bent over at its upper edge to form a flange (6) extending parallel to the base; wherein each flange and upper edge to form a flange (6) extending parallel to the base; wherein each flange and associated side wall is cut away at spaced intervals there along to form a plurality of pairs of the recesses (8) for receiving the spindles (5) of the rollers; and wherein each tab (12) is formed in the flange (6) adjacent to a recess and is bent downwardly towards the base to retain an associated spindle in the recess.

3. A roller track as claimed in Claim 2, wherein the flange is bent over at its outer edge to form a return wall (7) extending parallel to the side wall and back towards the base and wherein the return wall is cut away at each recess.

4. A roller track as claimed in Claim 2 or Claim 3, wherein the upper edge of each of the side walls (3) in the region of each recess is formed with a section (9) which is inclined relative to the base and wherein a spindle-receiving notch (10) is formed at the lower end of the inclined section (9).

5. A roller track according to Claim 4, wherein the tab (12) of each recess is formed adjacent to the respective notch (10) and is bent downwardly to retain a spindle (5) in the notch.

6. A method of manufacturing a roller track comprising the steps of:
providing a track profile (1) as claimed in any preceding claim;
dropping rollers (4) with spindles (5) onto the track profile such that the spindles of each roller locate in a pair of recesses; and
bending the tabs (12) of the associated recesses to retain the spindles therein.

## Patentansprüche

1. Rollenbahn (1) mit mindestens einer Zylinderrolle (4) mit einer Spindel (5), welche sich über beide Enden hinaus erstreckt, und mit einem im Allgemeinen U-förmigen Rollenbahnprofil, das eine Grundfläche (2) mit zwei sich gegenüber liegenden Seitenflächen (3) aufweist, wobei jede Seitenfläche (3) mit einer Vielzahl von Ausnehmungen (8) zur Aufnahme der Spindeln (5) der Rollen ausgebildet ist, und mit einem Reiter (12), der zu jeder Ausnehmung benachbart angeordnet ist, **dadurch gekennzeichnet, dass** der Reiter (12) nach der Anordnung einer Spindel (5) innerhalb der Ausnehmung (8) geknickt wird, um die Spindel in der Ausnehmung zu halten.

2. Rollenbahn nach Anspruch 1, wobei jede Seitenfläche über ihrem oberen Rand hinaus abgeknickt ist, um einen Winkelflansch (6) auszubilden, der sich parallel zur Grundfläche erstreckt, wobei jeder Flansch und jede zugehörige Seitenfläche in beabstandeten Zwischenräumen der Länge nach ausgeschnitten ist, um eine Vielzahl von Ausnehmungspaaren (8) für die Aufnahme der Spindeln (5) der Rollen auszubilden, und wobei jeder Reiter (12) in dem zur Ausnehmung benachbarten Flansch (6) ausgebildet ist und nach unten in Richtung der Grundfläche abgeknickt ist, um eine zugehörige Spindel in der Ausnehmung zu halten.

3. Rollenbahn nach Anspruch 2, wobei der Flansch an seinem äußeren Rand abgeknickt ist, um eine Flügelwand 7 auszubilden, die sich parallel zur Seitenfläche erstreckt und in Richtung Grundfläche austritt, und wobei die Flügelwand an jeder Ausnehmung ausgeschnitten ist.

4. Rollenbahn nach Anspruch 2 oder 3, wobei der obere Rand an jeder Seitenfläche (3) im Bereich einer jeden Ausnehmung mit einem Profilabschnitt (9) ausgebildet ist, der zur Grundfläche hin geneigt ist, und wobei eine Spindelaufnahmekerbe (10) am unteren Ende des geneigten Profilabschnittes (9) ausgebildet ist.

5. Rollenbahn nach Anspruch 4, wobei der Reiter (12) einer jeden Ausnehmung zu der entsprechenden Spindelaufnahmekerbe (10) benachbart ausgebildet und nach unten abgeknickt ist, um eine Spindel (5) in der Aufnahmekerbe zu halten.

6. Verfahren zur Herstellung einer Rollenbahn, das folgende Schritte aufweist:
Bereitstellen eines Rollenbahnprofils (1) nach einem der vorstehend genannten Ansprüche;
Absenken der Rollen (4) mit den Spindeln (5) auf das Rollenbahnprofil so, dass die Spindeln einer jeden Rolle in ein Paar der Ausnehmungen angeordnet werden, sowie
Abknicken der Reiter (12) der zugehörigen Ausnehmungen, um die Spindeln darin zu halten.

## Revendications

1. Chemin de roulement à rouleaux (1), comprenant au moins un rouleau cylindrique (4) comportant un arbre (5) qui s'étend à partir des deux extrémités de celui-ci, et un profilé de chemin de roulement en forme générale de U comportant une paroi de base (2) et une paire de parois latérales opposées (3), dans lequel chaque paroi latérale (3) est formée avec une pluralité d'évidements (8) destinés à recevoir les arbres (5) des rouleaux et avec une languette (12) adjacente à chaque évidement, **caractérisé en ce que** ladite languette (12) est pliée après positionnement d'un arbre (5) dans l'évidement (8) afin de retenir l'arbre dans l'évidement.

2. Chemin de roulement à rouleaux selon la revendication 1, dans lequel chaque paroi latérale est repliée au niveau de son bord supérieur pour former une bride (6) qui s'étend parallèlement à la base, dans lequel chaque bride et chaque paroi latérale associée sont découpées à des intervalles espacés tout au long afin de former une pluralité de paires d'évidements (8) destinés à recevoir les arbres (5) des rouleaux, et dans lequel chaque languette (12) est formée dans la bride (6), adjacente à un évidement, et est pliée vers le bas en direction de la base afin de retenir un arbre associé dans l'évidement.

3. Chemin de roulement à rouleaux selon la revendication 2, dans lequel la bride est repliée au niveau de son bord externe pour former une paroi de retour (7), qui s'étend parallèlement à la paroi latérale et revient vers la base, et dans lequel la paroi de retour est découpée au niveau de chaque évidement.

4. Chemin de roulement à rouleaux selon la revendication 2 ou la revendication 3, dans lequel le bord supérieur de chacune des parois latérales (3), dans la région de chaque évidement, est formé avec une section (9) qui est inclinée par rapport à la base, et dans lequel une encoche de réception d'arbre (10) est formée au niveau de l'extrémité inférieure de la section inclinée (9).

5. Chemin de roulement à rouleaux selon la revendication 4, dans lequel la languette (12) de chaque évidement est formée adjacente à l'encoche respective (10), et est pliée vers le bas afin de retenir un arbre (5) dans l'encoche.

6. Procédé de fabrication d'un chemin de roulement à rouleaux, comprenant les étapes consistant à :
prévoir un profilé de chemin de roulement (1) selon l'une quelconque des revendications précédentes ;
déposer les rouleaux (4) avec les arbres (5) venant sur le profilé de chemin de roulement, de façon que les arbres de chaque rouleau se situent dans une paire d'évidements ; et
plier les languettes (12) des évidements associés pour retenir les arbres à l'intérieur de ceux-ci.
